# EUROPEAN PATENT APPLICATION

(11) **EP 4 811 477 A1**
(43) Date of publication of application: **23.09.2026**
(21) Application number: 26158187.0
(22) Date of filing: 12.02.2026
(51) Int. Cl.: H01M 10/04, H01M 10/0587, H01M 50/528, H01M 50/533, H01M 50/538, H01M 50/609

(54) **ELECTRODE ASSEMBLY AND SECONDARY BATTERY**

(30) Priority: 17.03.2025 KR 20250033990
(71) Applicant: SAMSUNG SDI CO., LTD., Yongin-si, Gyeonggi-do 17084 (KR)
(72) Inventor: JEONG, Yong Hoon, 16678 Suwon-si, Gyeonggi-do (KR)
(74) Representative: Bardehle Pagenberg Partnerschaft mbB Patentanwälte Rechtsanwälte

(57) **Abstract**

An electrode assembly, including a first electrode, a second electrode, and a separator between the first electrode and the second electrode, wherein the electrode assembly is wound around a winding axis, and the first electrode includes a substrate including a first portion extending toward one side of the electrode assembly, the first portion having a first height, a second portion extending toward the one side of the electrode assembly, the second portion having a second height being different from the first height, and a mixture layer on a portion of the substrate.

## Description

### BACKGROUND

### 1. Field

The present disclosure relates to an electrode assembly and a secondary battery including the electrode assembly.

### 2. Description of the Related Art

In general, with the rapid spread of electronic devices that use batteries, such as portable phones, laptop computers, and electric vehicles, the demand for secondary batteries with high energy density and high capacity is rapidly increasing. Accordingly, research and development to improve the performance of lithium secondary batteries is actively being conducted.

A lithium secondary battery is a battery that includes a positive electrode and a negative electrode including active materials capable of intercalation and deintercalation of lithium ions, and an electrolyte, and produces electrical energy through oxidation and reduction reactions when lithium ions are intercalated/deintercalated into/from the positive electrode and negative electrode.

The above-described information disclosed in the background technology of this disclosure is only intended to improve understanding of the background of the present disclosure and therefore may include information that does not constitute related art.

### SUMMARY

Embodiments include an electrode assembly, including a first electrode, a second electrode, and a separator between the first electrode and the second electrode, wherein the electrode assembly is wound around a winding axis, and the first electrode includes a substrate including a first portion extending toward one side of the electrode assembly, the substrate having a first height, a second portion extending toward the one side of the electrode assembly, the second portion having a second height being different from the first height, and a mixture layer on a portion of the substrate.

The first portion may include a central region adjacent to a winding core portion of the electrode assembly, and an outer region on an outer side of the electrode assembly, and the second portion is between the central region and the outer region.

The outer region may extend toward the one side of the electrode assembly, the outer region having an outer height being equal to the first height, and the central region may extend toward the one side of the electrode assembly, the central region having a central height smaller than the outer height.

The central height may be greater than the second height.

The outer region may be bent toward the winding core portion.

The second height may be greater than or equal to 0 and less than the first height.

Embodiments include a secondary battery, including an electrode assembly including a first electrode, and a first current collector plate located on one side of the electrode assembly, wherein the first electrode includes a substrate including a first portion extending toward the first current collector plate or the one side of the electrode assembly, the substrate having a first height, and a second portion extending toward the first current collector plate or the one side of the electrode assembly, the second portion having a second height being different from the first height, and a mixture layer on a portion of the substrate, and the first current collector plate includes one or more first holes formed in a region facing the second portion, the first current collector plate including one or more first holes in a region facing the second portion.

The electrode assembly may further include a second electrode, a separator between the first electrode and the second electrode, and a winding core portion having a hollow.

The first current collector plate may further include a second hole surrounding a portion of a region of the first current collector plate corresponding to the hollow, a radius of the second hole being larger than a radius of the hollow.

The first current collector plate may further include a third hole within the region of the first current collector plate surrounding corresponding to the hollow, a radius of the third hole being smaller than a radius of the hollow.

The secondary battery may further include a second current collector plate on another side of the electrode assembly opposite to the one side, the second current collector plate being electrically connected to the second electrode.

The first portion may include a central region adjacent to the hollow, and an outer region on an outer side of the electrode assembly, and the second portion may be between the central region and the outer region.

The outer region may extend toward one side of the electrode assembly, the outer region having an outer height being equal to the first height, and the central region may extend toward the one side of the electrode assembly, the central region having a central height smaller than the outer height.

The central height may be greater than the second height.

The outer region may be joined to the first current collector plate, the outer region being bent toward the hollow.

The central region may be joined to the first current collector plate, the central region being bent toward the hollow or the outer region.

The central region may be a predetermined distance from one end of the first electrode close to the winding axis when the first electrode is wound around the winding axis.

The first current collector plate may further include a sub hole in at least one of a region facing the first portion and an outer region of the first current collector plate.

The first current collector plate may be joined to the first portion, the first current collector plate being electrically connected to the first electrode.

The second height may be greater than or equal to 0 and less than the first height.

### BRIEF DESCRIPTION

Features will become apparent to those of ordinary skill in the art by describing in detail exemplary embodiments with reference to the attached drawings, in which:
FIG. 1 is a perspective view schematically illustrating a secondary battery according to an embodiment of the present disclosure;
FIG. 2 is a cross-sectional view schematically illustrating a configuration of the secondary battery according to an embodiment of the present disclosure;
FIG. 3 is a perspective view schematically illustrating the secondary battery according to an embodiment of the present disclosure;
FIG. 4 is a cross-sectional view schematically illustrating the configuration of the secondary battery according to an embodiment of the present disclosure;
FIG. 5 is a view schematically illustrating an example of a first electrode according to an embodiment of the present disclosure in an unfolded state;
FIG. 6 is a view schematically illustrating an example of a first electrode according to an embodiment of the present disclosure in an unfolded state;
FIG. 7 is a view schematically illustrating an example of an electrode assembly and a first current collector plate according to an embodiment of the present disclosure;
FIG. 8 is a view schematically illustrating an example of the first current collector plate according to an embodiment of the present disclosure;
FIG. 9 is a view schematically illustrating an example of an electrode assembly and a first current collector plate according to an embodiment of the present disclosure;
FIG. 10 is a view schematically illustrating an example of the first current collector plate according to an embodiment of the present disclosure;
FIG. 11 is a perspective view schematically illustrating a battery pack according to an embodiment of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

Terms or words used in this specification and claims should not be interpreted as being limited to ordinary or dictionary meanings and should be interpreted as meanings and concepts consistent with the technical idea of this disclosure based on the principle that the inventor can properly define the concept of the term in order to describe his or her disclosure in the best way. Accordingly, it is to be understood that the embodiments described herein, and the configurations illustrated in the drawings are only some of the most exemplary embodiments of the disclosure and do not represent all of the technical ideas of the disclosure, and that there may be various equivalents and modifications that may replace them at the time of filing.

Furthermore, when used herein, the terms "comprise" or "include" and/or "comprising" or "including" specify the presence of the mentioned shapes, numbers, steps, operations, members, elements, and/or groups thereof and are not intended to exclude the presence or addition of one or more other shapes, numbers, operations, members, elements, and/or groups thereof.

In addition, in order to help understand the disclosure, the attached drawings are not drawn to actual scale, and the dimensions of some components may be exaggerated. In addition, the same reference numbers may be assigned to the same components in different embodiments.

The statement that two objects for comparison are 'equal' means 'substantially the same.' Therefore, substantially the same may include deviations that are considered low in the art, for example, deviations of less than 5%. Additionally, uniformity of a parameter over a given region may mean uniformity from an average perspective.

Although first, second, and the like are used to describe various components, the components are not limited by these terms. These terms are used only to distinguish one component from another, and unless otherwise specifically stated, it is to be understood that a first component may also be a second component.

Throughout the specification, unless otherwise specifically stated, each element may be singular or plural.

When an arbitrary configuration is placed "on (or under)" a component or "above (or below)" a component, it can mean not only that the arbitrary configuration is placed in contact with the top (or bottom) of the component, but also that other configurations can be interposed between the component and the arbitrary configuration placed on (or under) the component.

In addition, when a component is described as being "on," "connected to," or "coupled to" another component, the above components may be directly connected or coupled to each other, but it should be understood that other components may be "interposed" between each component, or each component may be "connected," "coupled," or "linked" through another component.

As used herein, the term "and/or" includes any and all combinations of one or more of the associated listed items. Further, the use of "may" when describing embodiments of the present disclosure relates to "one or more embodiments of the present disclosure." Expressions such as "one or more" and "at least one" before the list of elements modify the entire list of elements and do not modify individual elements in the list.

Throughout the specification, "A and/or B" means A, B, or A and B unless otherwise stated to the contrary. That is, "and/or" includes any or all combinations of a plurality of listed items. When "C to D" is stated, it means greater than or equal to C and less than or equal to D unless otherwise specifically stated.

When phrases such as "at least one of A, B, and C," "at least one of A, B, or C," "at least one selected from group of A, B, and C," or "at least one selected from A, B, and C" are used to specify a list of elements A, B, and C, the phrases may refer to any and all suitable combinations.

The term "use" may be considered synonymous with the term "utilize." As used in the present specification, the terms "substantially," "about," and other similar terms are used as terms of approximation rather than terms of degree, and are intended to consider an inherent variation in measured or calculated values recognized by those skilled in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be named a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the drawings. It will be understood that the spatially relative terms are intended to encompass different orientations of the device in use or operation in addition to the orientation depicted in the drawings. For example, when the elements or features in the drawings are inverted, an element described as "lower" or "below" "becomes "upper" or "above." Therefore, the term "below" can encompass both the upward and downward directions.

The terms used in the present specification are intended to describe the embodiments of the present disclosure, and are not intended to limit the present disclosure.

In the present specification, a Z-axis represents a height direction of a secondary battery 100. An X-axis is perpendicular to the Z-axis. A Y-axis is perpendicular to the Z-axis. In the present specification, an XY plane represents a plane perpendicular to the Z-axis.

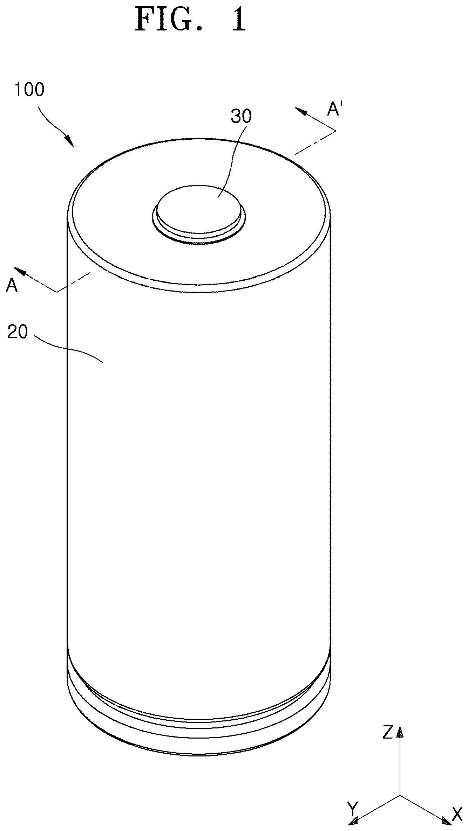

FIG. 1 is a perspective view schematically illustrating a secondary battery according to an embodiment of the present disclosure.

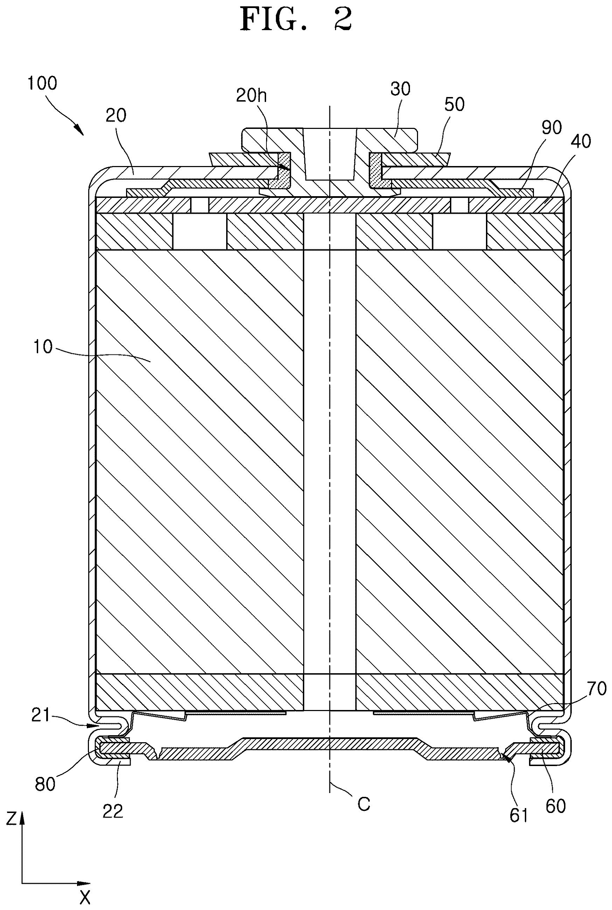

FIG. 2 is a cross-sectional view schematically illustrating the configuration of the secondary battery according to an embodiment of the present disclosure.

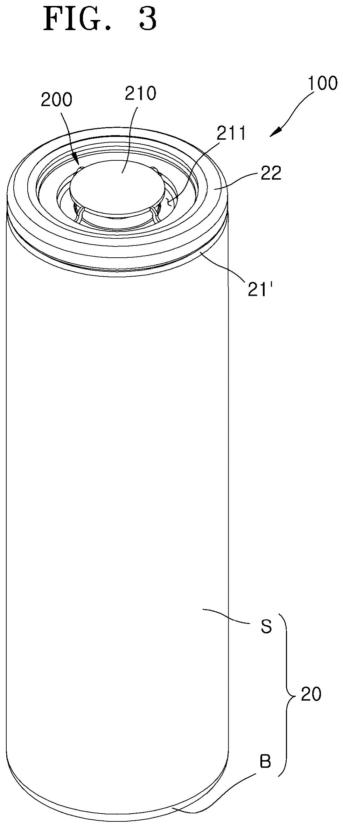

FIG. 3 is a perspective view schematically illustrating the secondary battery according to an embodiment of the present disclosure.

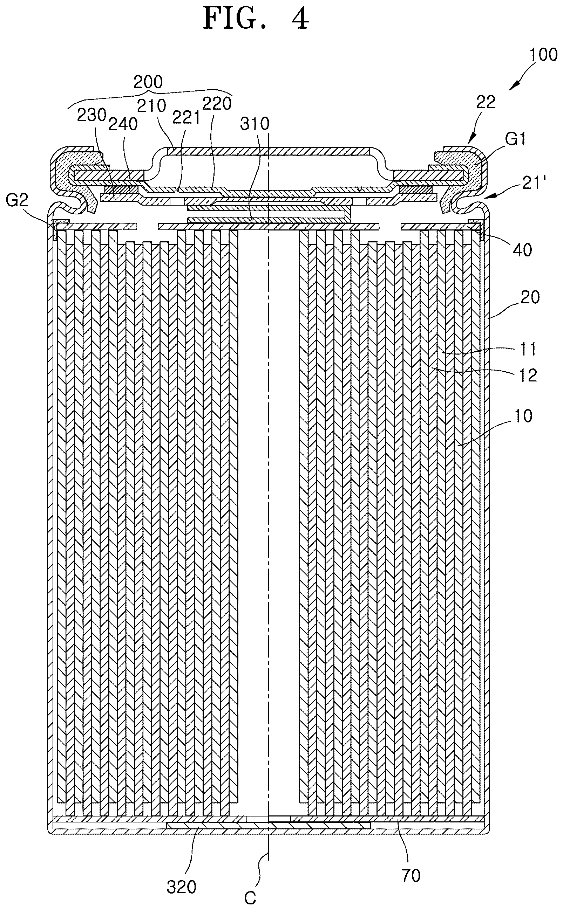

FIG. 4 is a cross-sectional view schematically illustrating the configuration of the secondary battery according to an embodiment of the present disclosure.

In FIGS. 1 to 4, reference numeral 100 denotes the secondary battery according to an embodiment of the present disclosure.

Referring to FIGS. 1 to 4, the secondary battery 100 according to an embodiment of the present disclosure includes an electrode assembly 10 and a case 20 which accommodates the electrode assembly 10. Furthermore, the secondary battery 100 includes a first current collector plate 40 and a second current collector plate 70 electrically connected to the electrode assembly 10.

However, the components of the secondary battery 100 may include only some of the components illustrated in FIGS. 1 to 4, and/or may further include other components in addition to the components illustrated in FIGS. 1 to 4.

The secondary battery 100 may be a lithium polymer battery or a prismatic type battery. Hereinafter, a case in which the secondary battery 100 is a cylindrical battery will be described as an example.

The electrode assembly 10 according to an embodiment of the present disclosure may function as a unit structure which performs charging and discharging operations of power in the secondary battery 100.

The electrode assembly 10 includes a first electrode 11 and a second electrode 12. The first electrode 11 is a positive electrode or a negative electrode. The second electrode 12 is a positive electrode or a negative electrode and has a different polarity from the first electrode 11. Hereinafter, a case in which the first electrode 11 is a positive electrode and the second electrode 12 is a negative electrode may be described as an example.

In addition, the electrode assembly 10 may further include a separator between the first electrode 11 and the second electrode 12. The separator may prevent the first electrode 11 and the second electrode 12 from coming into contact with each other and may prevent a short circuit between the first electrode 11 and the second electrode. The electrode assembly 10 may be formed by stacking the first electrode 11, the second electrode 12, and the separator provided between the first electrode 11 and the second electrode 12.

In this case, when the electrode assembly 10 forms a cylindrical shape, the stacked structure including the first electrode 11, the second electrode 12, and the separator may be wound to form a jelly-roll. For example, the electrode assembly 10 may have a shape wound in a clockwise or counterclockwise direction around a winding axis C. A cross-sectional shape of the electrode assembly 10 (e.g., a cross-section parallel to the XY plane) may be designed to have various shapes such as an ellipse or polygon, in addition to a circle. Here, the winding axis C may refer to an imaginary straight line passing through a center of the electrode assembly 10.

A detailed description of each component of the electrode assembly 10 is as follows.

As the positive electrode active material, a compound capable of reversible intercalation and deintercalation of lithium (lithiated intercalation compound) may be used. Specifically, one or more of composite oxides of lithium and a metal selected from cobalt, manganese, nickel, and a combination thereof may be used.

The composite oxide may be a lithium transition metal composite oxide, and specific examples thereof may include lithium nickel oxides, lithium cobalt oxides, lithium manganese oxides, lithium iron phosphate compounds, cobalt-free nickel-manganese oxides, or a combination thereof.

For example, a compound represented as any one of chemical formulas below may be used: LiₐA_{1-b}X_{b}O_{2-c}D_{c}(0.90≤a≤1.8, 0≤b≤0.5, 0≤c≤0.05); LiₐMn_{2-b}X_{b}O_{4-c}D_{c}(0.90≤a≤1.8, 0≤b≤0.5, 0≤c≤0.05); LiₐNi_{1-b-c}Co_{b}X_{c}O_{2-α}D_{α}(0.90≤a≤1.8, 0≤b≤0.5, 0≤c≤0.5, 0<α<2); LiₐNi_{1-b-c}Mn₃X_{c}O_{2-α}D_{α}(0.90≤a≤1.8, 0≤b≤0.5, 0≤c≤0.5, 0<α<2); LiₐNi_{b}Co_{c}L¹_{d}GₑO₂(0.90≤a≤1.8, 0≤b≤0.9, 0≤c≤0.5, 0≤d≤0.5, 0≤e≤0.1); LiₐNiG_{b}O₂(0.90≤a≤1.8, 0.001≤b≤0.1); LiₐCoG_{b}O₂(0.90≤a≤1.8, 0.001≤b≤0.1); LiₐMn_{1-b}G_{b}O₂(0.90≤a≤1.8, 0.001≤b≤0.1); LiₐMn₂G_{b}O₄(0.90≤a≤1.8, 0.001≤b≤0.1); LiₐMn_{1-g}G_{g}PO₄(0.90≤a≤1.8, 0≤g≤0.5); Li_{(3-f)}Fe₂(PO₄)₃(0≤f≤2); LiₐFePO₄(0.90≤a≤1.8).

In the above chemical formulas, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L1 is Mn, Al, or a combination thereof.

As an example, the positive electrode active material may be a high nickel positive electrode active material with a nickel content of 80 mol% or more, 85 mol% or more, 90 mol% or more, 91 mol% or more, or 94 mol% or more and 99 mol% or less based on 100 mol% of metals excluding lithium in the lithium transition metal composite oxide. The high nickel positive electrode active material can realize high capacity and thus may be applied to high capacity, high density lithium batteries.

### Positive electrode

The positive electrode for the secondary battery 100 may include a current collector and a positive electrode mixture layer formed on the current collector. The positive electrode mixture layer may include a positive electrode active material, and may further include a binder and/or a conductive material.

As an example, the positive electrode may further include an additive that may serve as a sacrificial positive electrode.

The content of the positive electrode active material may be 90 wt% to 99 wt% based on 100 wt% of the positive electrode mixture layer, and the content of each of the binder and the conductive material may be 0.5 wt% to 5 wt% based on 100 wt% of the positive electrode mixture layer.

The binder serves to attach particles constituting the positive electrode active material to each other well and also to attach the positive electrode active material to the current collector well. Representative examples of the binder may include polyvinyl alcohol, carboxymethylcellulose, hydroxypropyl cellulose, diacetylcellulose, polyvinyl chloride, carboxylated polyvinyl chloride, polyvinyl fluoride, polymers containing ethylene oxide, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, nylon, and the like, but this may vary.

The conductive material is used to impart conductivity to the electrode, and any material which does not cause a chemical change and is electrically conductive may be used. Examples of the conductive material may include a carbon material such as natural graphite, artificial graphite, carbon black, acetylene black, Ketjen black, carbon fibers, carbon nanofibers, or carbon nanotubes; a metal material in the form of a metal powder or metal fibers containing copper, nickel, aluminum, silver, etc.; a conductive polymer such as a polyphenylene derivative; or a mixture thereof.

Al may be used as the current collector, but the present disclosure is not limited thereto.

The negative electrode active material may include a material capable of reversibly intercalating and deintercalating lithium ions, lithium metal, an alloy of lithium and a metal, a material capable of doping and dedoping lithium, or a transition metal oxide.

The material capable of reversibly intercalating/deintercalating lithium ions may be a carbon negative electrode active material, for example, crystalline carbon, amorphous carbon, or a combination thereof. Examples of the crystalline carbon may include graphite such as amorphous, plate-shaped, flaky, spherical, or fibrous natural graphite or artificial graphite, and examples of the amorphous carbon may include soft carbon or hard carbon, mesophase pitch carbide, calcined coke, or the like.

An alloy of lithium and a metal selected from Na, K, Rb, Cs, Fr, Be, Mg, Ca, Sr, Si, Sb, Pb, In, Zn, Ba, Ra, Ge, Al, and Sn may be used as the alloy of lithium and a metal.

A Si negative electrode active material or Sn negative electrode active material may be used as the material capable of doping and dedoping the lithium. The Si negative electrode active material may include silicon, a silicon-carbon composite, SiOₓ (0 < x ≤2), an Si-Q alloy (Q is selected from an alkali metal, an alkaline earth metal, a Group 13 element, a Group 14 element (excluding Si), a Group 15 element, a Group 16 element, a transition metal, a rare earth element, and a combination thereof), or a combination thereof. The Sn negative electrode active material may be Sn, SnO₂, a Sn alloy, or a combination thereof.

The silicon-carbon composite may be a composite of silicon and amorphous carbon. According to an embodiment, the silicon-carbon composite may be in the form of silicon particles whose surfaces are coated with amorphous carbon. For example, the silicon-carbon composite may include a secondary particle (a core) in which silicon primary particles are assembled and an amorphous carbon coating layer (a shell) located on the surface of the secondary particle. The amorphous carbon may also be located between the silicon primary particles, and for example, the silicon primary particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles and an amorphous carbon coating layer located on a surface of the core.

The Si negative electrode active material or Sn negative electrode active material may be used in combination with the carbon negative electrode active material.

### Negative electrode

The negative electrode for the secondary battery 100 may include a current collector and a negative electrode mixture layer located on the current collector. The negative electrode mixture layer may include a negative electrode active material and may further include a binder and/or a conductive material.

For example, the negative electrode mixture layer may include 90 to 99.5 wt% of the negative electrode active material, 0.5 to 5 wt% of the binder, and 0 to 5 wt% of the conductive material.

The binder serves to attach particles constituting the negative electrode active material to each other well, and also to attach the negative electrode active material to the current collector well. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, polyester resin, (meth)acrylic resin, phenolic resin, epoxy resin, polyvinyl alcohol, and a combination thereof.

When the aqueous binder is used as the negative electrode binder, a cellulose compound capable of imparting viscosity may be further included. The cellulose compound may be used by mixing one or more of carboxymethyl cellulose, hydroxypropyl methyl cellulose, methyl cellulose, or alkali metal salts thereof. Na, K, or Li may be used as the alkali metal.

The dry binder is a polymer material capable of being fiberized and may be, for example, polytetrafluoroethylene, polyvinylidene fluoride, a polyvinylidene fluoride-hexafluoropropylene copolymer, polyethylene oxide, or a combination thereof.

The conductive material is used to impart conductivity to the electrode, and any material which does not cause a chemical change and is electronically conductive may be used. Specific examples may include a carbon material such as natural graphite, artificial graphite, carbon black, acetylene black, Ketjen black, carbon fibers, carbon nanofibers, or carbon nanotubes; a metal material in the form of a metal powder or metal fibers containing copper, nickel, aluminum, silver, etc.; a conductive polymer such as a polyphenylene derivative; or a mixture thereof.

The negative electrode current collector may be selected from copper foil, nickel foil, stainless steel foil, titanium foil, nickel foam, copper foam, a polymer substrate coated with a conductive metal, and a combination thereof.

Depending on the type of secondary battery 100, the separator may be present between the first electrode 11 and the second electrode 12. As the separator, polyethylene, polypropylene, polyvinylidene fluoride, or a multilayer film of two or more layers thereof may be used, and a mixed multilayer film such as a polyethylene/polypropylene two-layer separator, a polyethylene/polypropylene/polyethylene three-layer separator, a polypropylene/polyethylene/polypropylene three-layer separator, or the like may also be used.

The separator may include a porous substrate and a coating layer containing an organic material, an inorganic material, or a combination thereof located on one surface or both surfaces of the porous substrate.

The porous substrate may be a polymer film formed of any one polymer selected from polyolefins such as polyethylene and polypropylene, polyesters such as polyethylene terephthalate and polybutylene terephthalate, polyacetal, polyamide, polyimide, polycarbonate, polyether ketone, polyarylether ketone, polyetherimide, polyamideimide, polybenzimidazole, polyether sulfone, polyphenylene oxide, a cyclic olefin copolymer, polyphenylene sulfide, polyethylene naphthalate, glass fiber, Teflon, and polytetrafluoroethylene, or a copolymer or mixture of two or more thereof.

The organic material may include a polyvinylidene fluoride polymer or a (meth) acryl polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but this may vary.

The organic material and the inorganic material may be present as a mixture in a single coating layer or may be present in a form in which a coating layer including an organic material and a coating layer including an inorganic material are stacked.

The electrolyte for the secondary battery 100 includes a non-aqueous organic solvent and a lithium salt.

The non-aqueous organic solvent acts as a medium through which ions involved in the electrochemical reaction of the battery can move.

The non-aqueous organic solvent may be a carbonate solvent, an ester solvent, an ether solvent, a ketone solvent, an alcohol solvent, an aprotic solvent, or a combination thereof.

Examples of the carbonate solvents may include dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), propylene carbonate (PC), butylene carbonate (BC), and the like.

Examples of the ester solvent may include methyl acetate, ethyl acetate, n-propyl acetate, dimethyl acetate, methyl propionate, ethyl propionate, decanolide, mevalonolactone, valerolactone, caprolactone, and the like.

Examples of the ether solvent may include dibutyl ether, tetraglyme, diglyme, dimethoxyethane, 2-methyltetrahydrofuran, 2,5-dimethyltetrahydrofuran, tetrahydrofuran, and the like. In addition, cyclohexanone and the like may be used as the ketone solvent. As the alcohol solvent, ethyl alcohol, isopropyl alcohol, and the like may be used, and as the aprotic solvent, a nitrile such as R-CN (R is a straight, branched, or ring-shaped hydrocarbon group having 2 to 20 carbon atoms, and may include a double bond, an aromatic ring, or an ether group), an amide such as dimethylformamide, a dioxolane such as 1,3-dioxolane or 1,4-dioxolane, a sulfolane, and the like may be used.

The non-aqueous organic solvent may be used alone or in a mixture of two or more.

In addition, when using the carbonate solvent, a cyclic carbonate and a chain carbonate may be mixed and used, and the cyclic carbonate and the chain carbonate may be mixed in a volume ratio of 1:1 to 1:9.

The lithium salt is a substance that is dissolved in the organic solvent and acts as a source of lithium ions within the battery, enabling the basic operation of the lithium battery and promoting the movement of lithium ions between the positive electrode and the negative electrode. Representative examples of the lithium salt may include one or more of LiPF₆, LiBF₄, LiSbF₆, LiAsF₆, LiClO₄, LiAlO₂, LiAlCl₄, LiPO₂F₂, LiCl, LiI, LiN(SO₃C₂F₃)₂, Li(FSO₂)₂N (lithium bis(fluorosulfonyl)imide (LiFSI)), LiC₄F₉SO₃, LiN(CₓF₂ₓ₊₁SO₂)(C_{y}F_{2y+1}SO₂) (x and y are integers from 1 to 20), lithium trifluoromethane sulfonate, lithium tetrafluoroethanesulfonate, lithium difluorobis(oxalato)phosphate (LiDFOB), and lithium bis(oxalato)borate (LiBOB).

As described above, the case 20 is sealed after receiving the electrode assembly 10 and the electrolyte.

For example, as shown in FIGS. 1 and 2, the secondary battery 100 may further include a cap plate 60 sealing the case 20.

The case 20 according to an embodiment of the present disclosure forms an approximate exterior of the secondary battery 100. The case 20 may include an upper surface forming a cylindrical upper portion, and a side surface, which is connected to an outer surface of the upper surface and extends perpendicularly from the upper surface to form a side portion.

The case 20 may include a hole 20h (see FIG. 2) formed in an upper surface thereof. The hole 20h is formed to pass through the upper surface of the case 20. The hole 20h may be located at a central portion of the upper surface of the case 20. The hole 20h may be formed, for example, on an upper side of a winding core portion corresponding to the winding core portion of the electrode assembly 10. A shape of the hole 20h may correspond to the shape of a rivet 30. For example, when a cross-section of the rivet 30 is circular, a cross-section of the hole 20h may be formed in a circular shape. A diameter of the cross-section of the hole 20h is greater than a diameter of the cross-section of the rivet 30.

In this case, the case 20 may have a cylindrical lower portion that is open. The case 20 may seal the inside by having an opening sealed by the cap plate 60. However, unlike as shown in FIG. 2, the case 20 may have a cylindrical upper portion that is open. In addition, the opening of the case 20 may be sealed by a cap assembly. Accordingly, the case 20 may prevent the electrolyte from leaking to the outside and protect the electrode assembly 10.

The case 20 may be made of, for example, steel, stainless steel, aluminum, an aluminum alloy, a combination thereof, or an equivalent thereof.

The cap plate 60 according to an embodiment of the present disclosure seals the case 20 while covering the opening of the case 20.

The secondary battery 100 may further include a gasket 80 to seal the case 20 more reliably. The gasket 80 is formed, for example, in a ring shape. The gasket 80 may be located between the cap plate 60 and an inner surface of the case 20 while surrounding an outer surface of the cap plate 60. For example, the gasket 80 may include a polymer. The gasket 80 may prevent the electrolyte inside the secondary battery 100 from leaking to the outside or safety problems from occurring.

A beading portion 21 may be formed in the case 20 to fix the position of the cap plate 60 to the opening of the case 20. For example, the beading portion 21 is formed in a lower side of the case 20. The beading portion 21 is formed by recessing the case 20 inward. The beading portion 21 prevents the cap plate 60 from further entering the case 20 from the opening of the case 20 due to the recessed portion. In this case, a crimping portion 22 may be further formed in the case 20 to fix the position of the cap plate 60 to the opening of the case 20. The crimping portion 22 may be formed by bending an end of the opening of the case 20 toward the inside of the case 20. For example, the crimping portion 22 may be formed by being bent toward the case 20 after the cap plate 60 is provided in the opening of the case 20.

However, the case 20 may have a beadingless structure that does not include the beading portion 21 and/or the crimping portion 22, unlike as shown in FIGS. 1 and 2. In this case, for example, the cap plate 60 may be connected to the case 20 through welding. In other embodiments, for example, the case 20 has an opening formed in an upper portion thereof, and the cap plate 60 or the cap assembly may be joined to the opening of the case 20.

Accordingly, the cap plate 60 may cover the opening of the case 20.

The cap plate 60 may simultaneously serve as a vent. For example, the cap plate 60 may include a groove 61. The groove 61 may rupture when pressure inside the case 20 increases. The groove 61 may rupture to discharge gas generated inside the case 20 to the outside.

Meanwhile, the case 20 may be electrically connected to the electrode assembly 10 accommodated therein. For example, the case 20 is electrically connected to the second electrode 12. The second electrode may be, for example, a negative electrode.

For example, the case 20 may be electrically connected to the electrode assembly 10 through a second current collector plate 70.

The second current collector plate 70 according to an embodiment of the present disclosure is located under the electrode assembly 10. For example, the second current collector plate 70 may be located between a lower portion of the electrode assembly 10 and an upper portion of the cap plate 60.

For example, the second current collector plate 70 is electrically connected to the second electrode 12 to collect current from the second electrode 12. For example, the second current collector plate 70 is connected to a tab of the second electrode 12. In addition, the second current collector plate 70 is joined to the case 20. Accordingly, the case 20 may be electrically connected to the second electrode 12 and have the same polarity as the second electrode 12. For example, the second current collector plate 70 is a negative current collector plate. For example, the case 20 may have a negative polarity.

The second current collector plate 70 and the cap plate 60 may be insulated from each other by the gasket 80. For example, the second current collector plate 70 may extend between the gasket 80 and the case 20, and may be electrically connected to the case 20 while being insulated from the cap plate 60.

The rivet 30 is inserted into the hole 20h formed in the upper surface of the case 20. The rivet 30 is inserted into the hole 20h and is electrically connected to the electrode assembly 10 accommodated in the case 20. For example, the rivet 30 is electrically connected to the first electrode 11. The first electrode 11 may be, for example, a positive electrode.

The secondary battery 100 further includes a first current collector plate 40. The first current collector plate 40 may be located on an upper portion of the electrode assembly 10. The first current collector plate 40 is connected to the first electrode 11 and collects current. For example, the first current collector plate 40 is connected to a tab of the first electrode 11. In addition, the first current collector plate 40 is connected to the rivet 30. Accordingly, the rivet 30 may be electrically connected to the first electrode 11 to have the same polarity as the first electrode 11. For example, the first current collector plate 40 is a positive current collector plate. For example, the rivet 30 may have a positive polarity.

The rivet 30 may include a conductive material for electrical connection with the first electrode 11. For example, the rivet 30 includes a metal. For example, the rivet 30 may include aluminum (Al).

As described above, the rivet 30 is connected to the first electrode 11. Furthermore, the case 20 is connected to the second electrode 12. That is, the case 20 and the rivet 30 have different polarities. In this case, when the case 20 and the rivet 30 come into contact, a short circuit may occur between the case 20 and the rivet 30.

To avoid this problem, the secondary battery 100 may further include an insulator 50 that insulates between the case 20 and the rivet 30.

The insulator 50 is located on a lower side of the rivet 30. Additionally, the insulator 50 is located on an upper side of the case 20. For example, the insulator 50 may include an insulating material. The insulator 50 may be located between the case 20 and the rivet 30 and may insulate between the case 20 and the rivet 30. Accordingly, the insulator 50 prevents a short circuit from occurring between the case 20 and the rivet 30.

Meanwhile, the secondary battery 100 may further include an insulating layer 90. The insulating layer 90 may be provided on the first current collector plate 40. The insulating layer 90 prevents the first current collector plate 40 and the case 20 from being electrically connected.

In other embodiments, for example, as shown in FIGS. 3 and 4, the secondary battery 100 may further include a cap assembly 200 sealing the case 20.

For example, as shown in FIGS. 3 and 4, the case 20 according to an embodiment of the present disclosure may form an approximate exterior of the secondary battery 100. The case 20 may be provided to be electrically conductive. For example, the case 20 may include a material of at least one of steel, stainless steel, aluminum, and an aluminum alloy. Accordingly, the case 20 may protect the electrode assembly 10 from an external impact and perform a heat dissipation function of releasing heat accompanying the charging and discharging operations of the electrode assembly 10 to the outside.

The case 20 may include a cylindrical side wall portion S having a central axis C formed in the center thereof. The central axis C of the case 20, which will be described below, may refer to a central axis of the side wall portion S. Both end portions of the side wall portion S perpendicular to the central axis C of the case 20 may be formed to be open.

The case 20 may further include a bottom portion B which closes a lower end portion of the side wall portion S. The bottom portion B according to the embodiment may be formed to have a substantially circular plate shape, and may be disposed to face the lower end portion of the side wall portion S. The bottom portion B may be disposed perpendicular to the central axis C of the case 20. A circumference of the bottom portion B may be joined to the lower end portion of the side wall portion S. The bottom portion B may be formed integrally with the side wall portion S by a drawing process or the like, or in some embodiments, may also be joined to the side wall portion S by welding or the like after being manufactured separately from the side wall portion S.

The case 20 may further include an opening which opens an upper end portion of the side wall portion S. The opening may function as a configuration providing a path through which the electrode assembly 10 to be described below is inserted into the case 20 in an upper end region of the case 20, and providing a space where the cap assembly 200 to be described below may be installed (e.g., accommodated). The opening may refer to an empty space surrounded by an upper end portion of the side wall portion S located on the opposite side of the bottom portion B.

The electrode assembly 10 may be disposed in the case 20. The electrode assembly 10 may be inserted into the case 20 through the opening of the case 20.

The cap assembly 200 according to an embodiment of the present disclosure may be joined to the case 20 and seal the opening of the case 20.

For example, the cap assembly 200 may be disposed at an upper end portion of the side wall portion S, that is, the opening. A beading portion 21' that is concavely formed toward the central axis C of the case 20 may be formed in the side wall portion S. The beading portion 21' is disposed on the lower side of the cap assembly 200, and it is possible to restrict the cap assembly 200 from being inserted into the case 20 more than a set distance. A crimping portion 22 where the upper end portion of the side wall portion S is bent toward the central axis C of the case 20 may be formed on the upper side of the beading portion 21'. The crimping portion 22 may be disposed on the upper side of the cap assembly 200 and may prevent the cap assembly 200 from being separated to the outside of the case 20.

A gasket G1 may be disposed between the case 20 and the cap assembly 200. The gasket G1 may function as a component that fixes the position of the cap assembly 200 in the opening by its own elastic restoring force, electrically insulates the case 20 and the cap assembly 200 from each other, and prevents moisture or electrolyte from flowing between the case 20 and the cap assembly 200.

For example, the gasket G1 may include an insulating material such as rubber, polyethylene (PE), polypropylene (PP), polyethylene terephthalate (PET), or the like. The gasket G1 may be formed to have a substantially ring shape and may be disposed on an inner side of the beading portion 21' and/or the crimping portion 22. An outer surface of the gasket G1 may be in close contact with the inner surface of the beading portion 21' and/or the crimping portion 22, and an inner surface of the gasket G1 may be in close contact with the outer surface of the cap assembly 200.

Also, for example, the gasket G1 may be disposed on the inner surface of the beading portion 21' and/or the crimping portion 22.

The cap assembly 200 may be electrically connected to the first current collector plate 40 by a first electrode tab 310. Accordingly, the cap assembly 200 may be electrically connected to the first electrode 11. Since the first current collector plate 40 functions as the positive electrode of the electrode assembly 10, the cap assembly 200 may function as a positive electrode terminal of the secondary battery 100.

When the pressure inside the case 20 increases due to overcurrent, etc., the cap assembly 200 may block the electrical connection between the secondary battery 100 and an external device. The cap assembly 200 ruptures when the pressure inside the case 20 increases above a set level, and may connect the space inside and outside the case 20. Accordingly, the cap assembly 200 may reduce the risk of the secondary battery 100 exploding when overcurrent occurs.

The cap assembly 200 may include a vent plate 220. In addition, the cap assembly 200 may further include a cap down 230 and/or an insulator 240. In addition, the cap assembly 200 may further include a cap up 210.

The cap up 210 may form an upper side exterior of the cap assembly 200 and may be disposed in the opening. The cap up 210 may be electrically connected to the first current collector plate 40 by the cap down 230 and the vent plate 220.

For example, the cap up 210 may have a disk shape in which the central portion protrudes convexly upward. A central axis of the cap up 210 may be located coaxially with the central axis C of the case 20. A central portion of the cap up 210 may protrude outward from the case 20. An edge part of the cap up 210 may be disposed inside the case 20. A circumferential surface of the edge part of the cap up 210 may be spaced a predetermined distance apart from the inner surface of the gasket G1. The cap up 210 may include an electrically conductive material such as nickel, aluminum, copper, or the like.

A cap up hole 211 for discharging gas or the like generated in the case 20 to the outside of the case 20 may be formed in the cap up 210. The cap up hole 211 may have a shape of a hole passing through a circumferential surface of the central portion of the cap up 210. A plurality of the cap up hole 211 may be provided. The plurality of cap up holes 211 may be arranged at a predetermined interval along the circumferential surface of the central portion of the cap up 210.

The cap down 230 may be disposed to face the cap up 210 and may be electrically connected to the electrode assembly 10.

The cap down 230 may be formed to have a substantially disk shape and may be disposed inside the case 20. The cap down 230 may be disposed at a lower side (e.g., below) of the cap up 210. That is, the cap down 230 may be disposed between the cap up 210 and the electrode assembly 10. A central axis of the cap down 230 may be coaxial with the central axis C of the case 20. An upper surface of the cap down 230 may be disposed to be spaced apart from a lower surface of the cap up 210.

The cap down 230 may include an electrically conductive material such as nickel, aluminum, copper, or the like. The cap down 230 may be electrically connected to the electrode assembly 10. For example, an end portion of the first electrode tab 310 extending from the first current collector plate 40 may be connected to the lower surface of the cap down 230 by various types of coupling methods such as welding and the like. The cap down 230 may be electrically connected to the cap up 210 by the vent plate 220.

The vent plate 220 may be disposed between the cap up 210 and the cap down 230. The vent plate 220 may provide a current conduction path between the cap up 210 and the cap down 230 when the secondary battery 100 normally operates. The vent plate 220 may be deformed by the pressure of gas generated in the case 20 and block an electrical connection between the cap up 210 and the cap down 230 when an overcurrent occurs. The vent plate 220 may rupture when the internal pressure of the case 20 increases above a predetermined level and may open a gas discharge path.

The vent plate 220 may be formed to have a substantially disk shape. The vent plate 220 may be disposed such that the upper and lower surfaces thereof face the cap up 210 and the cap down 230, respectively. A central axis of the vent plate 220 may be disposed coaxially with the central axis C of the case 20. The vent plate 220 may include a conductive material, such as nickel, aluminum, copper, or the like.

Meanwhile, the cap assembly 200 may be formed in a form in which the cap up 210, the cap down 230, and the insulator 240 are omitted. In this case, the vent plate 220 may function as a terminal instead of the cap up 210. For example, the vent plate 220 may be connected to the first electrode 11 to function as a first electrode terminal.

Alternatively, the cap assembly 200 may be formed in a form in which the cap up 210 is omitted. In this case, the lower surface of the vent plate 220 may be disposed to face the cap down 230. In addition, the vent plate 220 may function as a terminal instead of the cap up 210. For example, the vent plate 220 may be connected to the first electrode 11 to function as the first electrode terminal.

The insulator 240 may be disposed between the vent plate 220 and the cap down 230.

The insulator 240 may be formed to have a hollow ring shape. A central axis of the insulator 240 may be located coaxially with the central axis C of the case 20 and the central axis of the vent plate 220. An upper surface of the insulator 240 may be in contact with the lower surface of the vent plate 220, and a lower surface of the insulator 240 may be in contact with the upper surface of the cap down 230. The insulator 240 may be formed of an insulating material such as polyethylene (PE), polypropylene (PP), polyethylene terephthalate (PET), or the like.

When an overcurrent occurs, the vent plate 220 may be deformed based on a hinge portion 221. For example, when the internal pressure of the case 20 increases due to an overcurrent, the gas passing through the cap down 230 presses the vent plate 220 upward, and the vent plate 220 may be deformed into a shape in which the central portion protrudes convexly upward due to a change in bending angle of the hinge portion 221.

When the vent plate 220 is deformed due to an increase in the internal pressure of the case 20, the electrical connection between the cap down 230 and the vent plate 220 may be blocked.

The first current collector plate 40 may be electrically connected to the cap assembly 200 by the first electrode tab 310.

For example, the first current collector plate 40 may be located on the upper portion of the electrode assembly 10. For example, the first current collector plate 40 may be located between the upper portion of the electrode assembly 10 and the cap assembly 200.

The first electrode tab 310 may be disposed on the upper side of the first current collector plate 40, and both end portions of the first electrode tab 310 may be respectively connected to the first current collector plate 40 and the cap assembly 200. For example, the first electrode tab 310 may include a conductive metal material such as copper, a copper alloy, nickel, or a nickel alloy.

However, the first current collector plate 40 may also be directly connected to the cap assembly 200 without the first electrode tab 310.

Meanwhile, the first current collector plate 40 may be insulated from the case 20 by an insulating member G2 disposed to surround at least a part of the outer surface of the first current collector plate 40.

The second current collector plate 70 may be electrically connected to the bottom portion B by a second electrode tab 320.

For example, the second current collector plate 70 may be located on the lower portion of the electrode assembly 10. For example, the second current collector plate 70 may be located between the lower portion of the electrode assembly 10 and the bottom portion B.

For example, the second current collector plate 70 is electrically connected to the second electrode 12 to collect current from the second electrode 12.

The second electrode tab 320 may be disposed on the lower side of the second current collector plate 70, and both end portions of the second electrode tab 320 may be respectively connected to the second current collector plate 70 and the bottom portion B of the case 20. For example, the second electrode tab 320 according to the embodiment may include a conductive metal material such as copper, a copper alloy, nickel, or a nickel alloy.

However, the second current collector plate 70 may also be directly connected to the case 20 without the second electrode tab 320.

With reference to FIGS. 1 to 4, the secondary battery 100 according to an embodiment of the present disclosure has been described. Hereinafter, an example of the electrode assembly 10 included in the secondary battery 100 is described in detail.

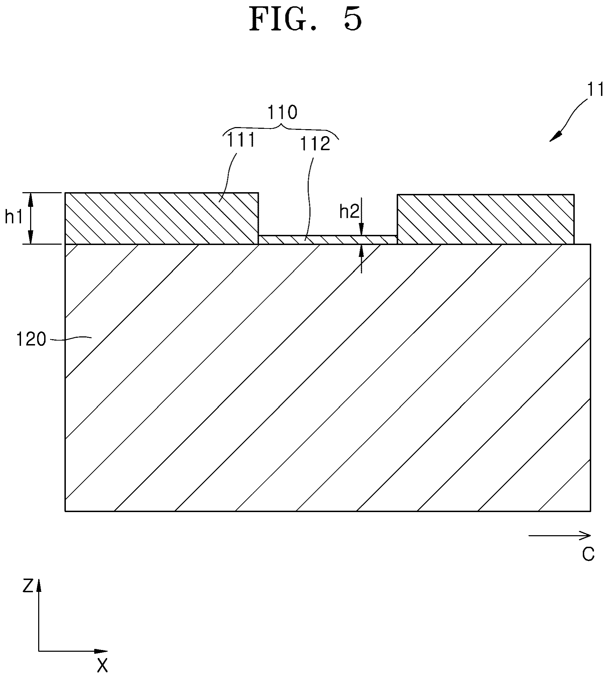

FIG. 5 is a view schematically illustrating an example of a first electrode according to an embodiment of the present disclosure in an unfolded state.

An electrode assembly 10 (e.g., including the electrode assembly 10 described in FIGS. 1 to 4) according to an embodiment of the present disclosure includes a first electrode 11, a second electrode 12, and a separator disposed between the first electrode 11 and the second electrode 12, and is formed by being wound around a winding axis C. In this case, the winding axis C may coincide with the central axis C described with reference to FIGS. 1 to 4.

The first electrode 11 according to an embodiment of the present disclosure includes a substrate 110 and a mixture layer 120.

The substrate 110 according to an embodiment of the present disclosure may collect current from the mixture layer 120.

The mixture layer 120 according to an embodiment of the present disclosure includes an active material. The mixture layer 120 may further include a conductive material, a binder, and the like.

For example, when the first electrode 11 is a positive electrode, the substrate 110 includes a positive electrode substrate. For example, the positive electrode substrate may include aluminum (Al). Also, for example, when the first electrode 11 is the positive electrode, the mixture layer 120 includes a positive electrode mixture layer. The positive electrode active material layer may include a positive electrode active material. For example, the positive electrode active material may include a compound capable of reversible intercalation and deintercalation of lithium (lithiated intercalation compound).

As another example, when the first electrode 11 is a negative electrode, the substrate 110 includes a negative electrode substrate. For example, the negative electrode substrate may include copper (Cu). Also, for example, when the first electrode 11 is the negative electrode, the mixture layer 120 includes a negative electrode mixture layer. For example, the negative electrode mixture layer may include a negative active material. For example, the negative electrode active material may include a material capable of reversibly intercalating/deintercalating lithium ions, lithium metal, an alloy of lithium and a metal, a material capable of doping and dedoping lithium, or a transition metal oxide.

The mixture layer 120 may be formed on one surface of the substrate 110. The mixture layer 120 may be formed on a portion of one surface of the substrate 110. The mixture layer 120 may be intermittently formed on one surface of the substrate 110. In other embodiments, the mixture layer 120 may be continuously formed on one surface of the substrate 110.

In other embodiments, the mixture layer 120 may be formed on both surfaces of the substrate 110. The mixture layer 120 may be formed on portions of both surfaces of the substrate 110. The mixture layer 120 may be intermittently formed on both surfaces of the substrate 110. In still other embodiments, the mixture layer 120 may be continuously formed on both surfaces of the substrate 110.

The mixture layer 120 may be formed in the form of a slurry and coated on the substrate 110. In other embodiments, the mixture layer 120 may be formed in the form of a free-standing film and attached onto the substrate 110.

As shown in FIG. 5, the substrate 110 includes a region in which the mixture layer 120 is not formed. At least a portion of a region on the substrate 110 where the mixture layer 120 is not formed may be described as being formed by extending from the mixture layer 120. Alternatively, the substrate 110 may be described as extending to one side or the other side of the electrode assembly 10.

The substrate 110 includes a first portion 111 and a second portion 112.

The first portion 111 according to an embodiment of the present disclosure extends toward one side of the electrode assembly 10 (i.e., toward one side of the electrode assembly 10 in a direction parallel to the winding axis C) and has a first height h1. For example, the first portion 111 may extend to the first height h1 toward a side where the first current collector plate 40 is located. For example, as illustrated in FIG. 2 or 4, when the first current collector plate 40 is located on the upper side of the electrode assembly 10, the first portion 111 may extend to the first height h1 toward the upper side of the electrode assembly 10.

The first height h1 may be greater than or equal to the shortest distance between the mixture layer 120 and the first current collector plate 40.

The first portion 111 may be located on one end side of the first electrode 11.

For example, the first portion 111 may be located adjacent to one end portion of the first electrode 11. That is, the first portion 111 may be spaced a predetermined distance apart from one end portion of the first electrode 11. In other embodiments, for example, the first portion 111 may be located at one end portion of the first electrode 11. In this case, the one end portion of the first electrode 11 represents an end portion of the side close to the winding axis C when the first electrode 11 is wound around the winding axis C.

The first portion 111 located on the one end side may be formed to have the first height h1.

The first portion 111 may be located on the other end side of the first electrode 11.

For example, the first portion 111 may be located at the other end portion of the first electrode 11. For example, the first portion 111 may be located adjacent to the other end portion of the first electrode 11. In this case, the other end portion of the first electrode 11 represents an end portion of the side close to the outer part of the electrode assembly 10 when the first electrode 11 is wound around the winding axis C.

The first portion 111 located on the other end side may be formed to have the first height h1.

Meanwhile, as shown in FIG. 5, the first portion 111 may be located on one end side of the first electrode 11 and the other end side of the first electrode 11.

For example, the first portion 111 may be located adjacent to one end portion of the first electrode 11, and at the same time, located at the other end portion of the first electrode 11. In other embodiments, for example, the first portion 111 may be located at one end portion of the first electrode 11, and at the same time, located at the other end portion of the first electrode 11. In other embodiments, for example, the first portion 111 may be located adjacent to one end portion of the first electrode 11, and at the same time, located adjacent to the other end portion of the first electrode 11. In other embodiments, for example, the first portion 111 may be located at one end portion of the first electrode 11, and at the same time, located adjacent to the other end portion of the first electrode 11.

The second portion 112 according to an embodiment of the present disclosure extends toward one side of the electrode assembly 10 and has a second height h2. For example, the second portion 112 may extend to the second height h2 toward a side where the first current collector plate 40 is located. For example, as illustrated in FIG. 2 or 4, when the first current collector plate 40 is located on the upper side of the electrode assembly 10, the second portion 112 may extend to the second height h2 toward the upper side of the electrode assembly 10.

For example, the second portion 112 may be formed by notching a portion of the first portion 111.

For example, the second height h2 may be greater than or equal to 0 and less than the first height h1. When the second height h2 is 0, the second portion 112 may not extend to one side of the electrode assembly 10. That is, when the second height h2 is 0, the length of the electrode assembly 10 in a height direction (Z axis) may be the same at the second portion 112 of the substrate 110 and the mixture layer 120.

The second portion 112 may be formed not to be adjacent to one end portion of the first electrode 11. The second portion 112 may also or instead be formed not to be adjacent to the other end portion of the first electrode 11. For example, when the first portion 111 is located adjacent to one end portion of the first electrode 11, and at the same time, located at the other end portion of the first electrode 11, the second portion 112 may be located between two of the first portion 111.

The second portion 112 may be formed with a relatively lower height than the first portion 111. When an electrolyte is injected from one side of the electrode assembly 10, the second portion 112 may create a path through which the electrolyte is easier to inject than the first portion 111. Accordingly, the electrolyte may easily enter the electrode assembly 10.

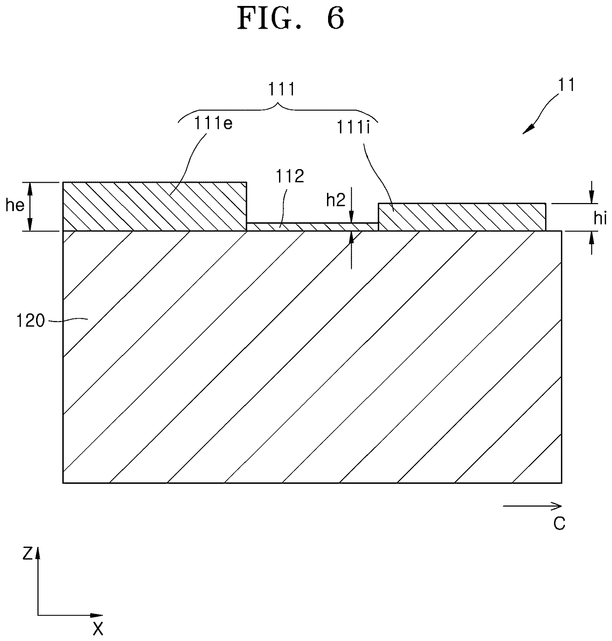

FIG. 6 is a view schematically illustrating an example of a first electrode according to an embodiment of the present disclosure in an unfolded state.

An electrode assembly 10 (e.g., including the electrode assembly 10 described in FIGS. 1 to 4) according to an embodiment of the present disclosure includes a first electrode 11, a second electrode 12, and a separator disposed between the first electrode 11 and the second electrode 12, and is formed by being wound around a winding axis C.

The first electrode 11 according to an embodiment of the present disclosure includes a substrate 110 including a first portion 111 and a second portion 112, and a mixture layer 120 formed on the substrate 110. In the description of the first electrode 11, the same or similar contents as those described for FIG. 5 may be omitted.

The first portion 111 according to an embodiment of the present disclosure may include at least one of a central region 111i and an outer region 111e.

The central region 111i according to an embodiment of the present disclosure may be formed adjacent to the winding core portion of the electrode assembly 10.

The central region 111i may be located on one end side of the first electrode 11.

For example, the central region 11li may be located adjacent to one end portion of the first electrode 11. That is, the central region 111i may be spaced a predetermined distance apart from one end portion of the first electrode 11. Accordingly, the central region 111i may facilitate the compression of the substrate 110 and/or allow the electrolyte to penetrate into the electrode assembly 10 better. In other embodiments, for example, the central region 111i may be located at one end portion of the first electrode 11. In this case, the one end portion of the first electrode 11 represents an end portion of the side close to the winding axis C when the first electrode 11 is wound around the winding axis C.

The central region 111i may extend toward one side of the electrode assembly 10 and have a central height hi. In this case, the central height hi may be less than the first height h1. In addition, the central height hi may be greater than the second height h2.

The outer region 111e according to an embodiment of the present disclosure may be located on an outer side of the electrode assembly 10.

The outer region 111e may be located on the other end side of the first electrode 11.

For example, the outer region 111e may be located at the other end portion of the first electrode 11. In other embodiments, for example, the outer region 111e may be located adjacent to the other end portion of the first electrode 11. In this case, the other end portion of the first electrode 11 represents an end portion of the side close to the outer part of the electrode assembly 10 when the first electrode 11 is wound around the winding axis C.

The outer region 111e may extend toward one side of the electrode assembly 10 and have an outer height he. The outer height he may be greater than the central height hi. In addition, the outer height he may be equal to the first height h1. That is, the outer height he may be formed to be greater than or equal to the shortest distance between the mixture layer 120 and the first current collector plate 40.

Meanwhile, as shown in FIG. 6, the first portion 111 may include both the central region 111i located on one end side of the first electrode 11 and the outer region 111e located on the other end side of the first electrode 11.

For example, the central region 11li may be located adjacent to one end portion of the first electrode 11, and the outer region 111e may be located adjacent to the other end portion of the first electrode 11. In other embodiments, for example, the central region 111i may be located at one end portion of the first electrode 11, and the outer region 111e may be located adjacent to the other end portion of the first electrode 11. In other embodiments, for example, the central region 111i may be located adjacent to one end portion of the first electrode 11, and the outer region 111e may be located at the other end portion of the first electrode 11. Alternatively, for example, the central region 111i may be located at one end portion of the first electrode 11, and the outer region 111e may be located at the other end portion of the first electrode 11.

The second portion 112 according to an embodiment of the present disclosure may be located between the central region 111i and the outer region 111e.

The second portion 112 may be formed at a relatively lower height than the first portion 111. When an electrolyte is injected from one side of the electrode assembly 10, the second portion 112 may create a path through which the electrolyte is easier to inject than the first portion 111. Accordingly, the electrolyte may easily enter the electrode assembly 10.

In addition, the first portion 111 may be easily joined to the first current collector plate 40 by including the central region 111i and the outer region 111e. For example, the substrate 110 may be compressed after the first electrode 11 is wound. For example, the substrate 110 may be formed in a shape that is easily joined to the first current collector plate 40 while one side thereof is bent. For example, the outer region 111e may be joined to the first current collector plate 40 while being bent toward a hollow of a winding core portion of the electrode assembly 10. For example, the outer region 111e, which is bent, may be welded to a lower surface of the first current collector plate 40. In addition, for example, the central region 111i may be joined to the first current collector plate 40 while being bent toward the hollow or outer surface. For example, the central region 111i, which is bent, may be welded to the lower surface of the first current collector plate 40. In this case, since the central region 111i is formed at a relatively lower height than the outer region 111e, the height imbalance caused by the overlapping of the substrate 110 in the first electrode 11 may be resolved.

With reference to FIGS. 5 and 6, examples of the first electrode 11 according to an embodiment of the present disclosure have been described. Hereinafter, an example of the electrode assembly 10 including the first electrode 11 and/or the first current collector plate 40 electrically connected to the first electrode 11 will be described in detail.

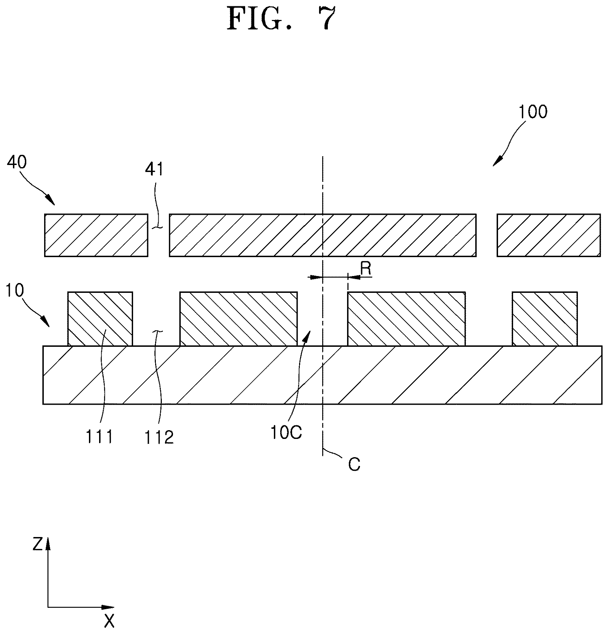

FIG. 7 is a view schematically illustrating an example of an electrode assembly and a first current collector plate according to an embodiment of the present disclosure.

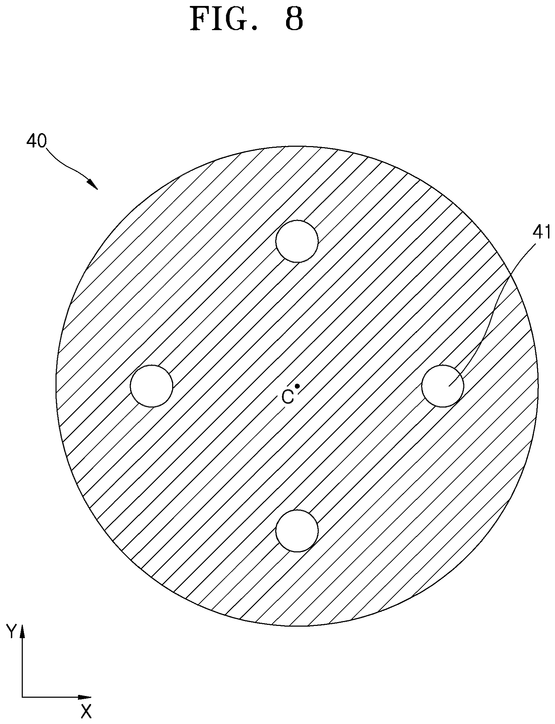

FIG. 8 is a view schematically illustrating an example of the first current collector plate according to an embodiment of the present disclosure.

FIG. 7 illustrates only the first current collector plate 40 and an upper portion of the electrode assembly 10 in a cross-sectional view taken along line A-A' of FIG. 1. In addition, FIG. 8 is a top view of the first current collector plate 40.

A secondary battery 100 (e.g., including the secondary battery 100 described with reference to FIGS. 1 to 6) according to an embodiment of the present disclosure includes an electrode assembly 10 (e.g., including the electrode assembly 10 described with reference to FIGS. 1 to 6) and a first current collector plate 40 (e.g., including the first current collector plate 40 described with reference to FIGS. 1 to 4).

A first electrode 11 according to an embodiment of the present disclosure includes a substrate 110 including a first portion 111 and a second portion 112, and a mixture layer 120 formed on the substrate 110. In the description of the first electrode 11, contents overlapping those described in FIGS. 1 to 6 may be omitted.

The first current collector plate 40 according to an embodiment of the present disclosure is electrically connected to the first electrode 11. The first current collector plate 40 collects current from the first electrode 11.

To this end, the first current collector plate 40 may be joined to the substrate 110 included in the first electrode 11 to be electrically connected to the first electrode 11.

For example, the first current collector plate 40 may be joined to the first portion 111 to be electrically connected to the first electrode 11. For example, the first current collector plate 40 may be welded to the first portion 111. For example, the first current collector plate 40 may be welded to the first portion 111 while forming one or more welding lines.

In addition, for example, the first current collector plate 40 may be joined to the first portion 111 and the second portion 112 to be electrically connected to the first electrode 11. For example, the first current collector plate 40 may be welded to the first portion 111 and/or the second portion 112. For example, the first current collector plate 40 may be welded to the first portion 111 and/or the second portion 112 while forming one or more welding lines. In this case, the second portion 112 may be formed such that the second height h2 is greater than zero.

The first current collector plate 40 includes one or more first holes 41 formed in regions in which the first current collector plate 40 faces the second portion 112.

The first hole 41 may be formed to pass through the first current collector plate 40. One or more first holes 41 may be formed in the first current collector plate 40. Although FIG. 8 illustrates an example in which the first current collector plate 40 includes four first holes 41, the first current collector plate 40 may include one to three or five or more first holes 41.

In addition, in FIG. 8, a case in which the shape of the first hole 41 is circular is shown as an example. However, the shape of the first hole 41 may be formed in various shapes such as a polygonal shape, an elliptical shape, and an irregular shape.

In addition, in FIG. 8, a case in which the plurality of first holes 41 are all disposed at equal intervals is shown as an example. However, some of the plurality of first holes 41 may be disposed at equal intervals, and others may be disposed at different intervals. Furthermore, the plurality of first holes 41 may all be disposed at different intervals from each other.

The first hole 41 may be formed to correspond to the second portion 112. The first hole 41 may be formed in a region of the first current collector plate 40 facing the second portion 112.

Through such a structure, the electrolyte injected into the case 20 may be easily impregnated deeper into the electrode assembly 10 through the first hole 41.

Meanwhile, the first portion 111 may be in contact with the first current collector plate 40. For example, one side of the first portion 111 may be bent and/or compressed in order to be easily welded to the first current collector plate 40. The electrolyte injected to the first portion 111 may not be directed to the core of the electrode assembly 10 but may be stored on the first portion 111. In this case, an inefficiency in which the amount of electrolyte impregnated in the electrode assembly 10 is smaller than the amount of electrolyte injected into the case 20 may occur.

In order to solve this problem, the size of the first hole 41 may correspond to the size of the second portion 112 or may be formed to be smaller than the size of the second portion 112. For example, when viewed from one side of the electrode assembly 10, the first hole 41 may overlap the second portion 112. In addition, for example, when viewed from one side of the electrode assembly 10, the first hole 41 may not overlap the first portion 111.

As described above, the first current collector plate 40 according to an embodiment of the present disclosure allows the electrolyte to be easily injected into the electrode assembly 10 through the first hole 41 formed at a position corresponding to the second portion 112. Furthermore, the first hole 41 may be formed to correspond to (e.g., be the same size as) or be smaller than the second portion 112, thereby preventing excessive injection of the electrolyte and allowing the electrolyte to be efficiently used.

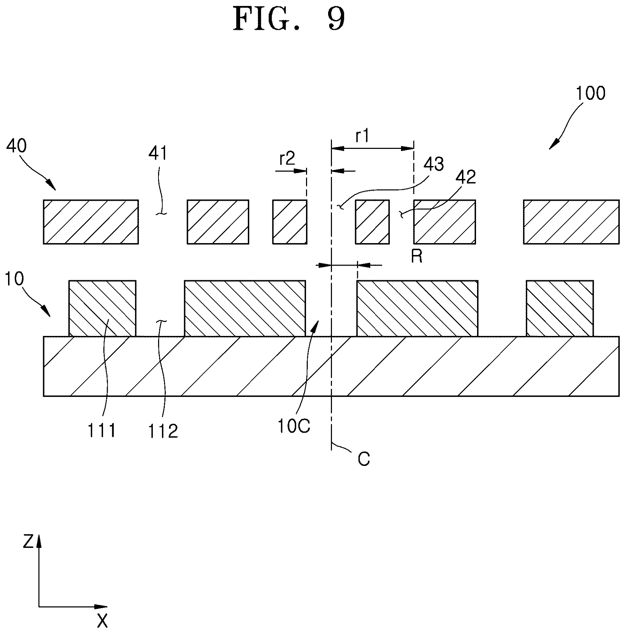

FIG. 9 is a view schematically illustrating an example of an electrode assembly and a first current collector plate according to an embodiment of the present disclosure.

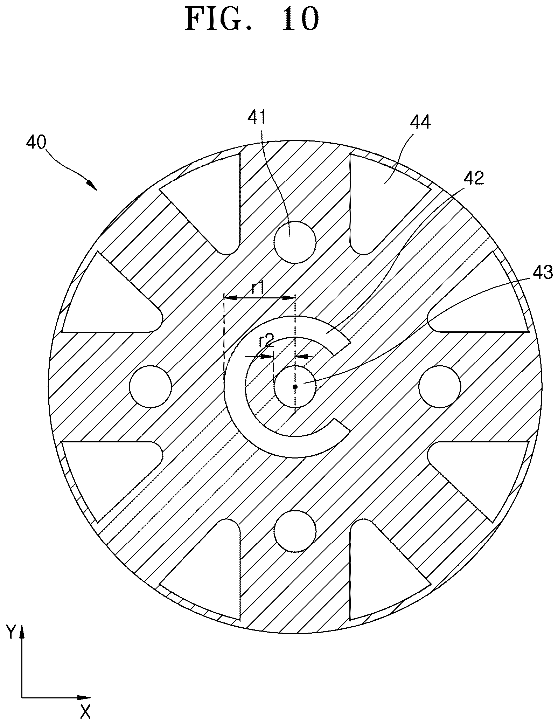

FIG. 10 is a view schematically illustrating an example of the first current collector plate according to an embodiment of the present disclosure.

FIG. 9 illustrates only the first current collector plate 40 and an upper portion of the electrode assembly 10 in a cross-sectional view taken along line A-A' of FIG. 1. In addition, FIG. 10 is a top view of the first current collector plate 40.

A secondary battery 100 (e.g., including the secondary battery 100 described with reference to FIGS. 1 to 8) according to an embodiment of the present disclosure includes an electrode assembly 10 (e.g., including the electrode assembly 10 described with reference to FIGS. 1 to 8) and a first current collector plate 40 (e.g., including the first current collector plate 40 described with reference to FIGS. 1 to 4, FIGS. 7 and 8).

The electrode assembly 10 according to an embodiment of the present disclosure may include a first electrode 11, a second electrode 12, and a separator disposed between the first electrode 11 and the second electrode 12.

The electrode assembly 10 may be wound around a winding axis C to form a hollow 10C in the winding core portion. The hollow 10C may be formed in a hollow shape and may improve the electrolyte impregnation property of the electrode assembly 10 and/or provide a space through which a welding device or the like for the secondary battery 100 may enter and exit.

A first electrode 11 according to an embodiment of the present disclosure includes a substrate 110 including a first portion 111 and a second portion 112, and a mixture layer 120 formed on the substrate 110. In the description of the first electrode 11, contents overlapping those described in FIGS. 1 to 8 may be omitted.

The first current collector plate 40 according to an embodiment of the present disclosure includes one or more first holes 41 formed in regions facing the second portion 112. In the description of the first current collector plate 40, contents overlapping those described in FIGS. 1 to 8 may be omitted.

The first current collector plate 40 may include a second hole 42. The second hole 42 may be formed to pass through the first current collector plate 40. The second hole 42 may serve as a passage through which the electrolyte may be injected.

The second hole 42 may be formed to surround a portion of a region corresponding to the hollow 10C (e.g., while surrounding the hollow 10C), the region being surrounded by the second hole 42 has an area being larger than a cross-section area of the hollow 10C, or has a radius being larger than that of the hollow 10C. For example, the second hole 42 may be formed in a substantially C shape. However, the shape of the second hole 42 may be formed in any shape that surrounds a portion of the region corresponding to the hollow 10C.

For example, the distance from the winding axis C to the outermost side of the hollow 10C in the electrode assembly 10 may be referred to as a winding core radius R. For example, the distance from the winding axis C to the outermost side of the second hole 42 in the first current collector plate 40 may be referred to as a first radius r1. In this case, the first radius r1 may be formed to be greater than the winding core radius R.

The first current collector plate 40 may further include a third hole 43. The third hole 43 may be formed to pass through the first current collector plate 40. The third hole 43 may serve as a passage through which the electrolyte may be injected.

The third hole 43 may be formed in a region corresponding to the hollow 10C. For example, the third hole 43 may have an approximately circular cross section. However, the shape of the third hole 43 is not limited thereto, and the third hole 43 may be formed in any shape formed within the region corresponding to the hollow 10C.

For example, the third hole 43 may be formed in the region corresponding to the hollow 10C and surrounded by the second hole 42 (e.g., with a portion of the first current collector plate 40 intervening) and may be formed to have a cross-section area being smaller than that of the hollow 10C or have a radius being smaller than that of the hollow 10C.

For example, the distance from the winding axis C to the outermost side of the hollow 10C in the electrode assembly 10 may be referred to as the winding core radius R. For example, the distance from the winding axis C to the outermost side of the third hole 43 in the first current collector plate 40 may be referred to as a second radius r2. In this case, the second radius r2 may be formed to be smaller than the winding core radius R.

Through this structure, the first current collector plate 40 may allow the electrolyte to be injected even toward the hollow 10C of the electrode assembly 10. Additionally or in other embodiments, the first current collector plate 40 may prevent a large amount of electrolyte from being injected into the hollow 10C of the electrode assembly 10 at one time.

The first current collector plate 40 may further include a sub hole 44. The sub hole 44 may be formed to pass through the first current collector plate 40. The sub hole 44 may serve as a passage through which the electrolyte may be injected.

The sub hole 44 may be formed in at least one of a region facing the first portion 111 and an outer region of the first current collector plate 40 facing an outer side of the first portion 111.

For example, the sub hole 44 may be formed at a position corresponding to the first portion 111. That is, the sub hole 44 may be formed to overlap the first portion 111. In other embodiments, for example, the sub hole 44 may be formed at positions corresponding to the first portion 111 and the second portion 112. That is, the sub hole 44 may be formed to overlap the first portion 111 and the second portion 112.

Additionally or in other embodiments, for example, the sub hole 44 may be formed in an outer region of the first current collector plate 40. For example, the sub hole 44 may be formed without overlapping the first portion 111 and the second portion 112. For example, the sub hole 44 may be formed to overlap a region in which the substrate 110 does not extend in the electrode assembly 10. For example, the electrolyte injected through the sub hole 44 may flow toward the outer portion of the electrode assembly 10 and/or the outer surface of the electrode assembly 10.

In other embodiments, the sub hole 44 may be formed to overlap all of the outer portion of the electrode assembly 10, the first portion 111, and the second portion 112.

FIG. 10 illustrates an example in which the sub hole 44 is formed in a substantially triangular shape, but this is only an example, and the shape of the sub hole 44 may vary. Additionally, FIG. 10 illustrates an example in which the first current collector plate 40 includes eight of the sub hole 44, but the number of sub holes 44 may vary.

Through this structure, the first current collector plate 40 may allow the electrolyte to be injected even toward the outer portion of the electrode assembly 10.

Meanwhile, FIG. 10 illustrates an example in which the first current collector plate 40 includes all of the first hole 41, the second hole 42, the third hole 43, and the sub hole 44, but the first current collector plate 40 may include all or some of the first hole 41, the second hole 42, the third hole 43, and the sub hole 44. For example, the first current collector plate 40 may include only the first hole 41, the second hole 42, and the third hole 43. In other embodiments, for example, the first current collector plate 40 may include only the first hole 41, the second hole 42, and the sub hole 44.

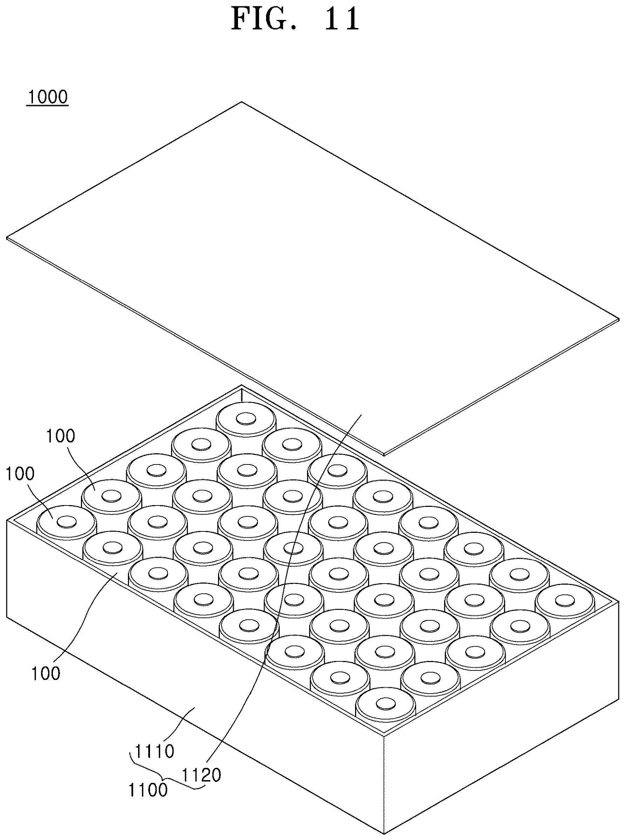

FIG. 11 is a perspective view schematically illustrating a battery pack according to an embodiment of the present disclosure.

A battery pack 1000 according to an embodiment of the present disclosure includes a plurality of secondary batteries 100 (for example, including the secondary batteries 100 described in FIGS. 1 to 4, and FIGS. 7 to 10), and a housing 1100 accommodating the plurality of secondary batteries 100.

The housing 1100 may form an approximate exterior of the battery pack 1000 and provide a space in which the secondary battery 100 may be accommodated.

The housing 1100 may include a housing body 1110 and a cover 1120.

The housing body 1110 may be formed to have the shape of a box with an empty interior and one open side. A cross-sectional shape of the housing body 1110 may be designed to have any of various shapes such as polygonal, circular, oval, or other shapes.

The cover 1120 may be joined to the housing body 1110 and may close the internal space of the housing body 1110. In one example, the cover 1120 may be formed to have a substantially plate shape and may be disposed to face the open side of the housing body 1110. The cover 1120 may be fixed to the housing body 1110 by any of various types of coupling methods, such as bolting, welding, fitting, and the like.

The secondary battery 100 may function as a unit structure for storing and supplying power in the battery pack.

A plurality of secondary batteries 100 may be provided. The plurality of secondary batteries 100 may be disposed to form various patterns such as a grid shape, a zigzag shape, and the like in the housing 1100. The plurality of secondary batteries 100 may be arranged parallel to each other. The number of secondary batteries 100 may be designed in various ways depending on the size, shape, and the like of the housing 1100.

For example, each of the plurality of secondary batteries 100 includes an electrode assembly 10 including a first electrode 11 and a first current collector plate 40 located on one side of the electrode assembly 10, and the first electrode 11 includes: a substrate 110 including a first portion 111 extending toward a first current collector plate 40 and having a first height h1 and a second portion 112 extending toward the first current collector plate 40 and having a second height h2; and a mixture layer 120 formed on a portion of the substrate 110, and the first current collector plate 40 may include one or more first holes 41 formed in a region facing the second portion 112.

Through this structure, an embodiment of the present disclosure may provide a battery pack 1000 including a secondary battery 100 with improved electrolyte impregnation properties.

The present invention is directed to providing a secondary battery that allows an electrolyte to be easily introduced into the electrode assembly.

For example, the present invention provides a secondary battery including a current collector plate with a hole into which the electrolyte is injected.

The present invention is also directed to providing an electrode assembly and/or a secondary battery with improved electrolyte impregnation properties.

For example, the present invention provides an electrode assembly with different lengths of substrates and/or a secondary battery including the electrode assembly.

For example, the present invention provides a secondary battery including a current collector plate in which a hole for injecting an electrolyte is formed corresponding to the length of a substrate.

According to the present disclosure, the electrolyte impregnation property of an electrode assembly can be improved.

According to the present disclosure, an electrolyte can be easily injected into an electrode assembly by passing through a current collector plate.

According to the present disclosure, the precipitation of nickel from an electrode can be alleviated.

According to the present disclosure, the life and/or stability of an electrode assembly and/or a secondary battery can be improved.

However, technical effects acquirable through the present disclosure are not limited to the above-described technical effects, and other technical effects that are not described will be clearly understood by those skilled in the art from the description of the disclosure described below.

Although the present disclosure has been described above by limited embodiments and drawings, various modifications and variations may be made by those of ordinary skill in the art within the spirit of the present disclosure and the equivalent scope of the claims to be described below.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the spirit and scope of the present disclosure as set forth in the following claims.

## Claims

1. An electrode assembly, comprising:
a first electrode;
a second electrode; and
a separator between the first electrode and the second electrode,
wherein:
the electrode assembly is wound around a winding axis, and
the first electrode includes:
a substrate including:
a first portion extending toward one side of the electrode assembly, the first portion having a first height, and
a second portion extending toward the one side of the electrode assembly, the second portion having a second height being different from the first height, and
a mixture layer on a portion of the substrate.

2. The electrode assembly as claimed in claim 1, wherein:
the first portion includes:
a central region adjacent to a winding core portion of the electrode assembly, and
an outer region on an outer side of the electrode assembly, and the second portion is between the central region and the outer region.

3. The electrode assembly as claimed in claim 2, wherein:
the outer region extends toward the one side of the electrode assembly, the outer region having an outer height being equal to the first height, and
the central region extends toward the one side of the electrode assembly, the central region having a central height smaller than the outer height.

4. The electrode assembly as claimed in claim 2 or 3, wherein the central height is greater than the second height.

5. The electrode assembly as claimed in any one of the preceding claims 2 to 4, wherein the outer region is bent toward the winding core portion.

6. The electrode assembly of any one of the preceding claims, wherein the second height is greater than or equal to 0 and less than the first height.

7. A secondary battery, comprising:
an electrode assembly including a first electrode; and
a first current collector plate located on one side of the electrode assembly, wherein:
the first electrode includes:
a substrate including:
a first portion extending toward the one side of the electrode assembly, the first portion having a first height, and
a second portion extending toward the one side of the electrode assembly, the second portion having a second height being different from the first height, and
a mixture layer on a portion of the substrate,
the first current collector plate including one or more first holes in a region facing the second portion.

8. The secondary battery as claimed in claim 7, wherein the electrode assembly further includes:
a second electrode,
a separator between the first electrode and the second electrode, and
a winding core portion having a hollow.

9. The secondary battery as claimed in claim 8, wherein the first current collector plate further includes a second hole surrounding a portion of a region of the first current collector plate surrounding corresponding to the hollow, a radius of the second hole being larger than a radius of the hollow.

10. The secondary battery as claimed in claim 9, wherein the first current collector plate further includes a third hole within the region of the first current collector plate surrounding corresponding to the hollow, a radius of the third hole being smaller than the radius of the hollow.

11. The secondary battery of any one of the preceding claims 8 to 10, further comprising a second current collector plate on another side of the electrode assembly opposite to the one side, the second current collector plate being electrically connected to the second electrode.

12. The secondary battery of any one of the preceding claims 8 to 11, wherein:
the first portion includes:
a central region adjacent to the hollow, and
an outer region on an outer side of the electrode assembly, and
the second portion is between the central region and the outer region.

13. The secondary battery of any one of the preceding claims 7 to 12, wherein the first current collector plate further includes a sub hole in at least one of a region facing the first portion and an outer region of the first current collector plate.

14. The secondary battery of any one of the preceding claims 7 to 13, wherein the first current collector plate is joined to the first portion, the first current collector plate being electrically connected to the first electrode.

15. The secondary battery of any one of the preceding claims 7 to 14, wherein the second height is greater than or equal to 0 and less than the first height.
